# EUROPÄISCHE PATENTSCHRIFT

(11) **EP 2 906 940 B1**
(45) Veröffentlichungstag und Bekanntmachung des Hinweises auf die Patenterteilung: **08.12.2021**
(21) Anmeldenummer: 13792585.5
(22) Anmeldetag: 10.10.2013
(51) Int. Cl.: G01N 29/14, G01N 29/42, G01N 29/44, G01N 29/48

(54) **VERFAHREN UND VORRICHTUNG ZUM VERMEIDEN UND/ODER ERKENNEN VON SPANNUNGSRISSEN BEI EINEM BAUTEIL INFOLGE HÄRTENS ODER RICHTENS**
METHOD AND APPARATUS FOR AVOIDING AND/OR DETECTION OF CRACKS OF A WORKPIECE DUE TO HARDENING AND/OR STRAIGHTENING
PROCÉDÉ ET DISPOSITIF POUR L'ÉVITEMENT ET/OU LA DÉTECTION DES FISSURES D'UN ÉCHANTILLON À LA SUITE D'UN DURCISSEMENT ET/OU UN ALIGNEMENT

(30) Priorität: 10.10.2012 DE 202012009675 U
(43) Veröffentlichungstag der Anmeldung: 19.08.2015
(73) Patentinhaber: Seuthe, Ulrich, 58300 Wetter (DE)
(72) Erfinder: Seuthe, Ulrich, 58300 Wetter (DE)
(74) Vertreter: Grosse Schumacher Knauer von Hirschhausen
(86) Internationale Anmeldenummer: PCT/EP2013/003045
(87) Internationale Veröffentlichungsnummer: WO 2014/056615

(56) Entgegenhaltungen:
- EP-A1- 0 636 881
- EP-A1- 1 429 141
- DE-A1- 3 014 348
- DE-U1-202009 014 773
- GB-A- 2 340 604
- HAUSILD P ET AL: "Characterization of strain-induced martensitic transformation in a metastable austenitic stainless steel", MATERIALS AND DESIGN, LONDON, GB, Bd. 31, Nr. 4, 1. April 2010 (2010-04-01), Seiten 1821-1827, XP026821157, ISSN: 0261-3069 [gefunden am 2009-11-10]
- None

## Beschreibung

### GEBIET DER ERFINDUNG

Die Erfindung betrifft Vorrichtungen und Verfahren und Anordnungen zum Erkennen und Vermeiden von Spannungsrissen, insbesondere eine Vorrichtung, ein Verfahren und eine Anordnung nach dem Oberbegriff des Anspruchs 1, 8 bzw. 13.

### TECHNISCHER HINTERGRUND

Härteverfahren auf Basis einer insbesondere lokalen Wärmebehandlung, die nicht im Ofen durchgeführt werden, wie etwa Induktionshärten oder Flammhärten, sind im Stand der Technik bekannt, um beispielsweise große metallische Bauteile zu härten.

Induktivhärten gehört zu den Randschichthärteverfahren. In einer oberflächennahen Randzone eines Bauteils wird es durch eine gesteuerte Folge von Erwärmen/Abschrecken eine martensitische Härtung und damit eine Härtesteigerung bewirkt. Gefüge und Härte im Kern des Bauteils bleiben hingegen unbeeinflusst. Üblicherweise wird eine Spule mit Wechselstrom beaufschlagt, wodurch ein Magnetfeld entsteht, das Wirbelströme in der Randschicht eines metallischen Bauteils induziert, welche zu einer lokalen Erwärmung führen. Die Oberfläche wird bis auf die erforderliche Härtetemperatur erhitzt und anschließend beispielsweise mit einer Brause abgeschreckt. Die Eindringtiefe der Wirbelströme hängt dabei von der Frequenz des Wechselstroms dergestalt ab, dass bei abnehmender Frequenz die Eindringtiefe steigt. Typische Frequenzen liegen im Bereich von 50-500 kHz.

Beim Flammhärten wird die Oberfläche eines metallischen Bauteils mittels Gasbrenner oder dergleichen ebenfalls lokal erhitzt und abgekühlt.

Beim Induktivhären, Flammhärten wie auch bei anderen Wärmebehandlungsverfahren kann es beim Erhitzen, beim Abschrecken und/oder beim Abkühlen infolge Temperaturspannungen zu einer Rissbildung im Bauteil kommen. Um derartige Spannungsrisse zu erkennen, ist es im Stand der Technik bekannt, jedes induktivgehärtete, flammgehärtete oder anderweitig wärmebehandelte Bauteil einer Einzelstückprüfung zu unterziehen. Ein geläufiges Prüfverfahren ist das Magnetpulververfahren. Ebenso kommen Farbeindringverfahren zur Anwendung.

Auch beim Richten, insbesondere Biegerichten, können Spannungsrisse in einem Bauteil entstehen. Diese können während des Richtvorgangs nicht erkannt werden.

Die EP 1 429 141 A1 offenbart eine zerstörungsfreie Prüfung rohrförmiger Bauteile mittels Körperschallmessung in einer abgeschlossenen Messkammer unter Verwendung eines Druckmediums, wobei auf die Erkennung einer Beschädigung zur Ausleitung des Bauteils aus dem Produktionsprozess abgestellt wird.

Aus der DE 20 2009 014773 U1, GB 2 340 604 A, DE 30 14 348 A1, EP 1 429 141 A1 sowie EP 0 636 881 A1 sind jeweils Verfahren und Vorrichtungen zum Erkennen schadhafter Bauteile auf Körperschallbasis bekannt.

Nachteilig ist beim bekannten Härten und Richten, dass ein separater Produktionsschritt zur Prüfung auf Spannungsrisse erforderlich ist. So muss jedes Bauteil nach dem Härten und Auskühlen bzw. Richten aufwändig untersucht werden. Dies erhöht die Kosten und die Herstellungszeit.

### DARSTELLUNG DER ERFINDUNG

Ausgehend hiervon liegt der Erfindung die Aufgabe zugrunde, Vorrichtungen und Verfahren und Anordnungen zum Erkennen und Vermeiden von Spannungsrissen, insbesondere eine Vorrichtung, ein Verfahren und eine Anordnung nach dem Oberbegriff des Anspruchs 1, 8 bzw. 13 zu schaffen, die schneller und kostengünstiger sind bzw. eine Spannungsrissbildung vermeiden.

Diese Aufgabe wird entsprechend den Merkmalen des Anspruchs 1, 8 bzw. 13 gelöst.

Demnach wird eine Vorrichtung zum Erkennen einer Rissbildung bei einem Bauteil infolge Härtens unter insbesondere lokaler Wärmebehandlung, wie etwa Induktivhärten oder Flammhärten des Bauteils, oder beim Richten, insbesondere beim Biegerichten, umfassend einen Schallsensor, der mit dem Bauteil körperschallkoppelbar ist, geschaffen, wobei die Vorrichtung zum insbesondere Frequenz-Zeitbasierten Auswerten von während des Härtens und/oder Richtens vom Schallsensor erfassten Schallsignalen ausgestaltet ist.

Durch die Erfassung von Körperschall und die Frequenz-Zeit-basierte Auswertung des Körperschalls noch während des Härtens bzw. Richtens wird erstmals eine In-Process-Kontrolle beim Richten, z.B. Biegerichten, bzw. beim Härten, d. h. Induktivhärten, Flammhärten oder dergleichen, geschaffen, die noch während des Processes die Ausbildung von Rissen erkennen kann. Eine zeitintensive und aufwändige separate Prüfstufe, die dem Richten oder Härten nachgelagert ist, kann ersatzlos entfallen. Es ergeben sich erhebliche Kosteneinsparungen.

Hierzu wird ein Schallsensor, beispielsweise vom Piezo-Typ, an das Bauteil körperschallangekoppelt, d.h. derart mit dem Bauteil verbunden, dass Schallwellen vom Bauteil auf den Schallsensor übertragen werden können. Dies kann durch direkte Montage des Schallsensors auf dem Bauteil erfolgen. Vorzugsweise ist der Schallsensor jedoch auf einer Haltevorrichtung des Bauteils fest montiert, so dass im entstehende Schallsignale über die Haltevorrichtung auf den Schallsensor übertragen werden.

Der Schallsensor erfasst Schallsignale als Funktion der Zeit. Die Schallsignale lassen sich bei Bedarf als dreidimensionales Frequenz-Zeit-Diagramm darstellen mit der Zeit (oder einer davon abgeleiteten Größe) entlang einer Achse, der Frequenz (oder einer davon abgeleiteten Größe) entlang einer weiteren Achse und einem zur Schallenergie oder Schallintensität proportionalen oder in einer sonstigen mathematischen Beziehung stehenden Wert entlang einer noch weiteren Achse. Anstelle der Zeit kann auch eine Funktion, die in Bezug zur Zeit steht, gewählt werden; gleiches gilt für die Frequenz und die Schallenergie. Die Darstellung dient lediglich der Visualisierung des Konzepts.

Zur Erkennung, ob ein Riss entstanden ist, wird während des Härtens die Schallenergie oder Schallintensität in bestimmten Frequenzbereichen zu bestimmten Zeiten erfasst und ausgewertet (Frequenz-Zeit-basiertes Auswerten). Auf Basis der Auswertung kann eine Rissbildung unmittelbar erkannt werden. Auch können plastische Fließvorgänge beim Richten oder allgemein beim Umformen erkannt werden. Ebenso ist es möglich, den Schallverlauf während des Richtens und/oder Härtens zunächst nur zu erfassen, dem Bauteil zuzuordnen und später auszuwerten.

Erfindungswesentlich ist die Erfassung von Bauteil-Schall noch während des Richtens und/oder Härtens. Die Frequenzauflösung kann gering bleiben, beispielsweise bis zu wenigen hundert kHz oder auch in für Körperschallanalysen bisher ungewöhnliche Frequenzen bis zu 50 MHz vordringen (z.B. 100kHz, 500kHz, 1MHz, 2MHz, 5MHz, 10MHz, 50MHz).

Insbesondere beim Induktivhärten wird das Bauteil zu starken Schwingungen hauptsächlich im Bereich der elektrischen Feldschwingung angeregt. Hierbei kommen eine KHz aber auch hohe bzw. multiple Anregungsfrequenzen zur Anwendung. Diese Schwingungen bewegen sich i. d. R. in bestimmten Frequenzbändern, die im Allgemeinen während des Prozesses in ihrer Frequenz und Amplitude variieren.

Eine dem Stand der Technik entsprechende 2-dimensionale Analyse der Prozessvorgänge versagt dabei, die Dynamik der Frequenz- und Amplitudenänderungen in den verschiedenen Frequenzen darzustellen. Diese Informationen geben aber Aufschluss über die Energieübertragung auf das Bauteil und geben eine Abschätzung über die Energien in verschiedenen Eindringtiefen.

Die quantitative Auswertung der multiplen Anregungsfrequenzen bzw. ihrer Auswirkungen im Bauteil während des laufenden Induktivhärtens lassen Rückschlüsse auf die Härtetiefe und die erzielte Härte zu.

Daneben treten Emissionen aufgrund von Gefügeumwandlungen und von Rissbildungen auf, die sich aufgrund ihres vollkommen anderen Frequenzbildes von den Erregungsfrequenzen unterscheiden lassen.

Insbesondere Rissbildung lässt sich aufgrund ihrer breitbandigen entsprechend einer Impulsantwort aussehenden Form selbst innerhalb starker Induktionsemissionen detektieren.

Bei anderen Wärmebehandlungsverfahren wie z. B. dem Flammhärten treten eher nichtperiodische Emissionen durch die von Gasbrennern eingebrachte Energie auf. Diese Anregungsenergien sind also nicht in einzelnen Bändern zu analysieren. Sie haben aber meist eine Frequenzobergrenze, so dass Rissbildung während der Erwärmung oberhalb dieser Frequenzen erkannt werden kann.

Nach dem Ende der Erwärmung, und das gilt für alle Verfahren, kann die Frequenzanalyse die Emissionsfrequenzen der Abschreckung durch das kühlende Medium in Geräusche durch Einbringung des Kühlmediums, von Gefügeveränderungen, plastische Veränderungen, und von spontaner bzw. akkumulierender Rissbildung unterscheiden.

Wenn zur Frequenzanalyse noch eine Bewertung der Amplituden über der Zeit verwendet wird, kann bei einer solchen Betrachtung der Gesamtdynamik quasi die Form im Frequenz- Zeit-Diagramm zur Bewertung multipler Prozesseigenschaften herangezogen werden.

Die Vorrichtung kann eine Klassifizierung des Bauteils nach Anzahl und/oder Stärke der erkannten Risse signalisieren, d.h. beispielsweise in einer Datei speichern, durch Lichtsignal anzeigen oder ein Steuersignal erzeugen.

Die Auswertung erfolgt dabei zweckmäßigerweise in Echtzeit noch während des Erhitzens, Abschreckens und/oder Abkühlens des Bauteils.

Besonders einfach lässt sich die Erfindung realisieren, indem die in einem Zeitfenster integrierte Energie der Schallsignale, ggf. oberhalb eines unteren Grenzfrequenzwerts, mit einem Schwellenwert verglichen wird und bei Überschreiten eine Rissbildung erkannt wird. Eine detaillierte Betrachtung der Frequenz kann hierbei entfallen und die Vorrichtung ist verhältnismäßig einfach aufbaubar.

Hierzu kann im Fall des Induktionshärtens ein Bandpassfilter oder dergleichen mit einer Grenzfrequenz oberhalb der Induktionsfrequenz vorgesehen sein, so dass Schallsignale des Induktionshärtens selbst unberücksichtigt bleiben.

Das Zeitfenster wird zweckmäßigerweise dergestalt gewählt, dass es einem material- und/oder prozessabhängigen Zeitabschnitt für die Entstehung eines Risses oder einer Phase des Härtens entspricht.

Erfindungsgemäß sind unterschiedliche Risskategorie-Schwellenwerte vorgesehen zum Vergleichen mit der integrierten Intensität von innerhalb eines Frequenz- und/oder Zeitfensters erfassten Schallsignalen. Damit lässt sich eine Abstufung der Risse einfach darstellen, beispielsweise in die Kategorie "möglicherweise kleiner Riss", "kleiner Riss", "mittlerer Riss", "großer Riss" etc.

Erfindungsgemäß sind für zwei Zeitabschnitte des Härteprozesses unterschiedliche Risskategorie-Schwellenwerte vorgesehen, somit kann flexibler risserkannt werden. So können während des Abschreckens andere Schwellenwerte zweckmäßig sein als beim Abkühlen.

Erfindungsgemäß wird ein defektes Bauteil mit einem oder mehreren Rissen dann erkannt, wenn eine Gesamtenergiemenge der ab einem Startzeitpunkt erfassten Schallsignale überschritten wird. Hier wird lediglich die Gesamtenergie aufaddiert, die in Frequenzbereichen oberhalb Induktionsfrequenz durch den Schallsensor erfasst wird; diese Energie kann nur von Rissen herrühren. Alternativ kann auch ein höherer Grenzwert verwendet werden und es kann ggf. der induktionsschall mit integriert werden.

In einer Ausführung kann es vorgesehen sein, bei Überschreiten einer Gesamtenergiemenge der in einem mitlaufenden Zeitfenster erfassten Schallsignale ein Riss erkannt wird. Das Zeitfenster entspricht in etwa der Zeitdauer eines Risses, kann aber auch deutlich länger sein, z.B. 1/10 s. Wird innerhalb einer jeden zehntel Sekunde der Schwellenwert der aufaddierten Energie überschritten, wird ein Riss erkannt und das Bauteil als fehlherhaft eingestuft. Diese Ausführungsform kommt, in digitaler Ausführung, mit einem Minimum an Zwischenspeicher für die Schallsignale aus.

Die Erfindung schafft ferner ein Verfahren zum Erkennen einer Rissbildung bei einem Bauteil infolge Härtens unter insbesondere lokaler Wärmebehandlung des Bauteils, wie etwa Induktivhärten oder Flammhärten, und/oder infolge Richtens des Bauteils, insbesondere Biegerichtens des Bauteils, wobei eine Frequenz- und/oder Zeit-Auswertung von während des Härtens bzw. Richtens von einem mit dem Bauteil schallgekoppelten Schallsensor erfassten Schallsignalen durchgeführt wird. Die erfassten Schallsignale sind dabei Körperschallemissionen, die beim Härten bzw. Richten des Bauteils im Bauteil entstehen.

Das Verfahren kann eine Klassifizierung des Bauteils nach Anzahl und/oder Stärke der erkannten Risse ermöglichen.

Zweckmäßigerweise werden die Körperschallemissionen während des Erhitzens, Abschreckens und/oder Abkühlens des Bauteils bzw. während des Richtens insbesondere in Echtzeit ausgewertet.

Vorteilhafterweise wird die in einem Zeitfenster integrierte Energie der Schallsignale, ggf. oberhalb eines unteren Grenzfrequenzwerts, mit einem Schwellenwert verglichen und bei Überschreiten eine Rissbildung erkannt. Als Zeitfenster kann ein material- und/oder prozessabhängiger Zeitabschnitt für die Entstehung eines Risses gewählt werden oder ein Abschnitt, der einer Phase des Härtens bzw. Richtens entspricht.

Das Verfahren kann unterschiedliche Risskategorie-Schwellenwerte verwenden zum Vergleichen mit der integrierten Intensität von innerhalb eines Frequenz- und/oder Zeitfensters erfassten Schallsignale.

Zweckmäßigerweise werden für mehrere, z.B. zwei verschiedene, Zeitabschnitte des Härteprozesses bzw. Richtprozesses unterschiedliche Risskategorie-Schwellenwerte verwendet.

Beim Induktionshärten kann ein Bandpassfilter oder dergleichen mit einer Grenzfrequenz oberhalb der Induktionsfrequenz verwendet werden.

Bei Erreichen oder Überschreiten einer Gesamtenergiemenge der ab einem Startzeitpunkt erfassten Schallsignale kann auf einen Riss erkannt werden. Gegebenenfalls kann bei Überschreiten einer Gesamtenergiemenge der in einem mitlaufenden Zeitfenster erfassten Schallsignale auf einen Riss erkannt werden.

Die Erfindung schafft ferner ein Verfahren sowie eine Vorrichtung zur Vermeidung von Spannungsrissen beim Umformen, insbesondere Richten, insbesondere Biegerichten, eines Bauteils, insbesondere vor, während oder nach einem Härten des Bauteils, insbesondere nach dem vorstehend beschriebenen Verfahren und/oder mit der vorstehend beschriebenen Vorrichtung, umfassend eine (Frequenz-Zeit-)Analyse in Echtzeit, wobei das Bauteil einer ansteigenden Umformkraft ausgesetzt wird und dabei Körperschallemissionen erfasst werden, die Körperschallemissionen unter (Frequenz-Zeit-)Analyse in Echtzeit ausgewertet werden, um durch plastische Verformung hervorgerufene Körperschallemissionen zu erkennen.

Das Umformen kann (i) nach dem Erkennen von durch plastische Verformung hervorgerufenen Körperschallemissionen beendet werden oder unterbrochen und anschließend mit gleichbleibender oder verringerter Umformkraft fortgeführt werden, oder (ii) das Umformen kann nach dem Erkennen von durch plastische Verformung hervorgerufenen Körperschallemissionen mit einer geregelten Umformkraft fortgesetzt werden, bei der die durch plastische Verformung hervorgerufenen und in Echtzeit erfassten und erkannten Körperschallemissionen nicht weiter ansteigen oder in einem festgelegten Energiebereich oder Amplitudenbereich verbleiben.

Das Umformen kann nach einer bestimmten Zeitspanne nach Einsetzen der durch plastische Verformung hervorgerufenen Körperschallemissionen beendet, d.h. unterbrochen oder abschließend beendet, werden. Das Umformen kann ferner nach Überschreiten eines Schwellenwerts für die aufintegrierte Energie der Körperschallemissionen, insbesondere der durch plastische Verformung hervorgerufenen Körperschallemissionen, beendet werden. Das Umformen kann nach Überschreiten eines Schwellenwerts für die Amplitude der Körperschallemissionen, insbesondere der durch plastische Verformung hervorgerufenen Körperschallemissionen, beendet werden.

Zum Beenden des Umformens kann die Umformkraft gelöst, verringert oder auf dem letzten Wert gehalten werden. Nach Beenden des Umformens kann das Bauteil erneut einem Umformprozess ausgesetzt werden, so dass das Beenden hier einem Unterbrechen des gesamten Umformprozesses entspricht. Zweckmäßigerweise werden mehrere einzelne Belastungsschübe bis zum Erreichen der gewünschten Endform des Bauteils nacheinander durchgeführt.

Die Erfindung schafft ferner eine Anordnung zum Richten eines Bauteils durch plastisches Umformen, insbesondere entsprechend dem vorbeschriebenen Verfahren, umfassend eine Richtvorrichtung zum Erzeugen einer Umformkraft, einen Körperschallsensor zum Anbringen an ein zu richtendes Bauteil, sowie einer Steuerung, die während des Einwirkens der Umformkraft auf das Bauteil Körperschallemissionen erfasst und in Echtzeit auswertet und bei Erkennen von Körperschallemissionen, die durch plastische Verformung des Bauteils entstehen, die Richtvorrichtung derart steuert, dass die Umformung beendet wird.

Hierbei werden plastische Fließvorgänge im Bauteil anhand empirisch oder analytisch zu ermittelnder Charakteristika, z.B. bestimmter Muster im Zeit-FrequenzSpektrum, erkannt und bei Erkennen dieser Fließvorgänge das Einsetzen der plastischen Verformung des Bauteils erkannt. Die Umformkraft wird sodann nicht mehr erhöht, wodurch Spannungsrisse vermieden werden, sondern geregelt oder gesteuert auf eine Kraft oberhalb der zum plastischen Umformen erforderlichen Kraft und unterhalb einer Kraft, die zu Rissen, insbesondere Spannungsrissen, im Bauteil führt.

Die Steuerung kann derart ausgestaltet sein, dass zum Beenden der Umformung die Richtvorrichtung zum Lösen der Umformkraft oder zum Halten der Umformkraft gesteuert oder zum Verringern der Umformkraft - insbesondere auf einen Wert, bei dem die Amplitude und/oder Energie der Körperschallemissionen, die durch die plastische Verformung des Bauteils entstehen, nicht weiter steigt oder einen Schwellenwert nicht überschreitet - geregelt wird.

Die Anordnung ist zweckmäßigerweise zum Wiederholen der Umformung nach Beendigung der Umformung ausgestaltet, bis das Bauteil eine gewünschte Endform erreicht. Hierdurch kann das Bauteil in aufeinanderfolgenden Belastungsschüben in die gewünschte Endform umgeformt werden unter Vermeidung einer zu hohen Umformkraft, die zu (Spannungs-)Rissen führen könnte.

Die Anordnung kann eine Richtvorrichtung, insbesondere eine Biegerichtvorrichtung, sein.

Weitere Merkmale und Ausführungsformen der Erfindung ergeben sich aus der nachfolgenden Beschreibung, den Figuren und den Ansprüchen.

### KURZBESCHREIBUNG DER FIGUREN

Fig. 1 illustriert eine erfindungsgemäße Vorrichtung.
Fig. 2 illustriert ein dreidimensionales Frequenz-Zeit-Diagramm.
Fig. 3 und 4 zeigen ein Frequenz-Zeit-Diagramm eines Induktionshärteprozesses in 3D bzw. in Draufsicht auf die Frequenz-Zeit-Ebene.
Fig. 5 und 6 zeigen den Induktionshärteprozess aus Fig. 3, 4 in einem anderen Zeitfenster.
Fig. 7 bis 12 zeigen einen weiteren Induktionshärteprozess als 3D-Frequenz-ZeitDiagramme und in Schnitten.
Fig. 13 und 14 zeigen ein Frequenz-Zeit-Diagramm eines Induktionshärteprozesses in 3D.
Fig. 14 und 15 zeigen ein Frequenz-Zeit-Diagramm des Induktionshärteprozesses der Fig. 13, 14 in einem anderen Zeitfenster in 3D bzw. in Draufsicht auf die Frequenz-Zeit-Ebene.

### DETAILLIERTE BESCHREIBUNG VON AUSFÜHRUNGSBEISPIELEN

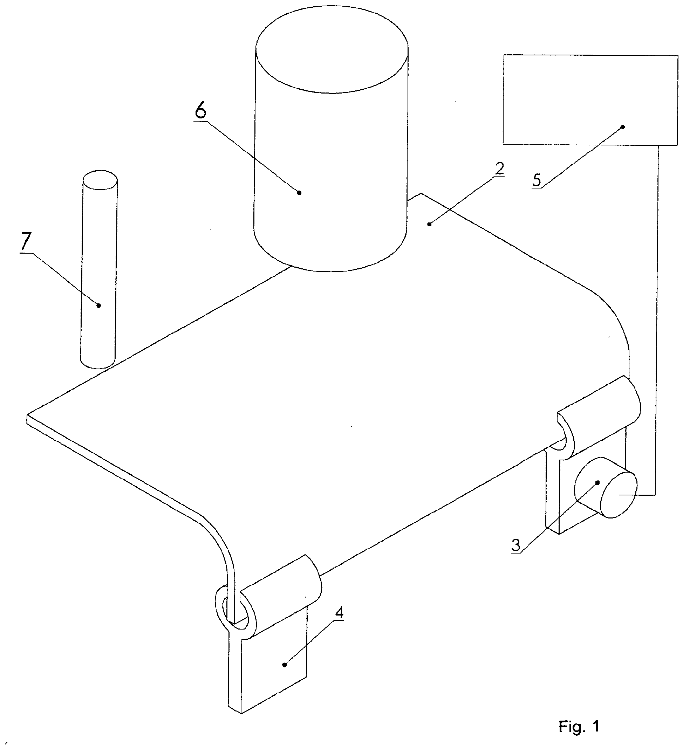

Die in Fig. 1 dargestellte Vorrichtung 1 zum Erkennen einer Rissbildung bei einem Bauteil 2 infolge Induktivhärtens des Bauteils 2 umfasst einen Schallsensor 3, der hier an einer Halterung 4 für das Bauteil 2 befestigt ist und im Bauteil 2 entstehende Schallsignale erfasst. Eine hier separat dargestellte Auswerteeinheit 5 ist mit dem Schallsensor 3 gekoppelt und wertet den Schall aus, während das Bauteil 2 mittels einer beispielsweise verfahrbaren Spule 6 lokal erhitzt und mittels Kühlmittel 7 anschließend abgeschreckt wird. Beim Flammhärten wird anstelle der Spule 6 ein Brenner oder dergleichen verwendet.

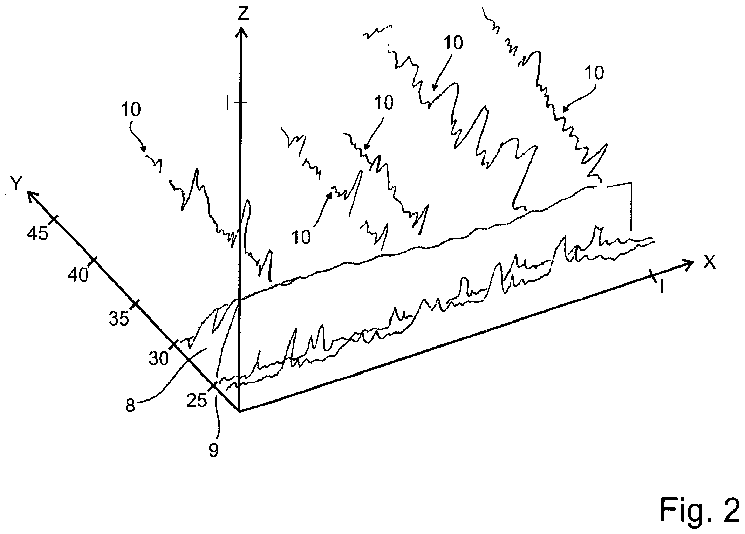

Ein typisches Frequenz-Zeit-Spektrum ist in Fig. 2 illustriert. Ein Wert, der in Relation zur Schallintensität oder zur Energie des Schalls steht, ist entlang der z-Achse aufgetragen, während entlang der x-Achse die Zeit und entlang der y-Achse die Frequenz (oder Funktionen davon) aufgetragen sind.

Ersichtlich ist zeitlich konstant ein Berg 8 ausgebildet, der auf die Induktion zurückzuführen ist, hier beispielsweise zwischen 25 und 30 kHz. Mit geringerer Frequenz wird durch das Kühlmittel 7 erzeugter Schall vom Schallsensor 2 im Bereich 9 erfasst.

Risse finden beim Induktionshärten zu im wesentlichen diskreten Zeitpunkten, also schnell, statt. Bei einem Riss wird Schallenergie mit einem bestimmten Schallspektrum frei, welches u.a. von der Länge und Breite des Risses, der Materialbeschaffenheit usw. abhängt. Fünf Risse 10 sind erkennbar, mit jeweils unterschiedlichem Schallspektrum.

Erfindungsgemäß wird die Energie, die oberhalb des Bergs 8 erzeugt wird, mit oder ohne Frequenzauswertung dafür herangezogen, einen Riss zu erkennen. Hierzu kann beispielsweise eine Mustererkennung verwendet werden, um in einem Frequenz-Zeit-Diagramm Risse zu erkennen. Besonders zweckmäßig ist es jedoch, die Schallenergie oberhalb eines Grenzwertes, hier oberhalb des Bergs 9 mit 40 kHz dargestellt, aufzuaddieren und mit einem Rissbildungs-Grenzwert zu vergleichen. Wird der Rissbildungs-Grenzwert überschritten, ist ein Riss entstanden.

Die Erfassung und Auswertung erfolgt zweckmäßigerweise digital, d.h. vom Schallsensor 2 erfasste Werte werden digitalisier, ggf. frequenzanalysiert, und digital verarbeitet.

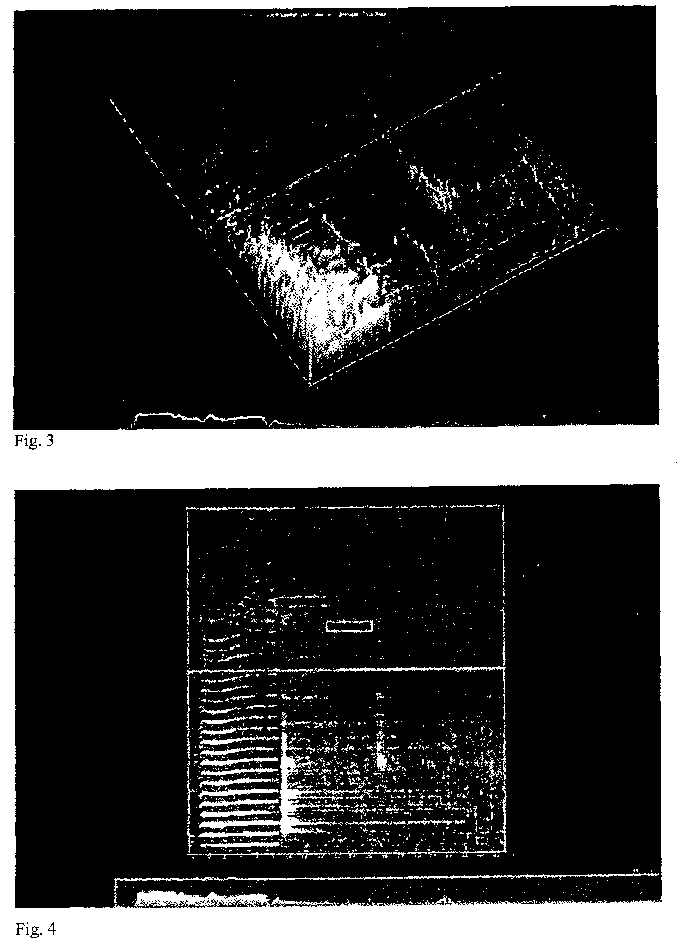

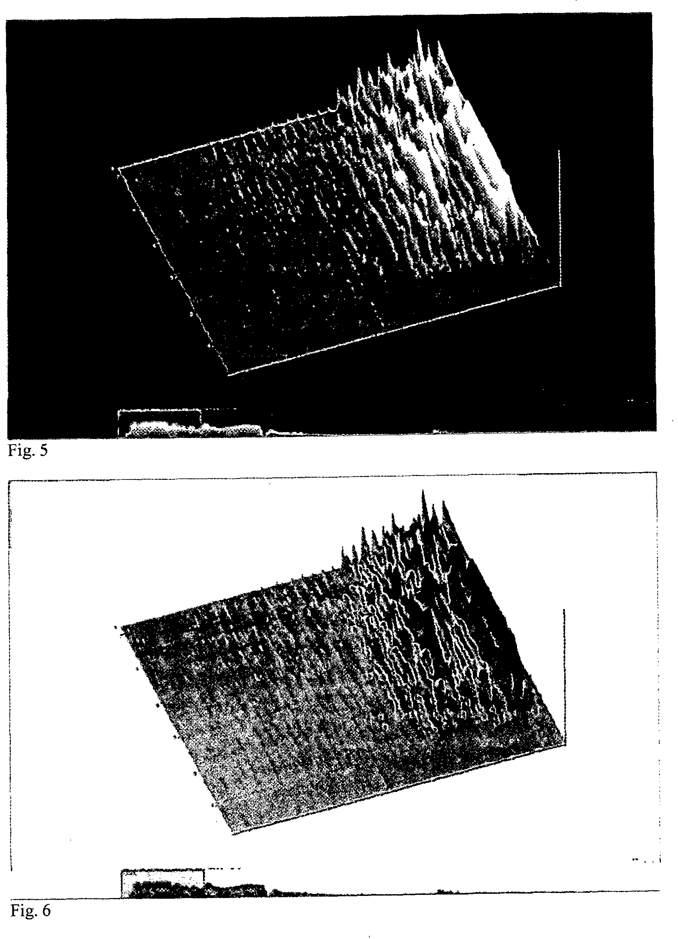

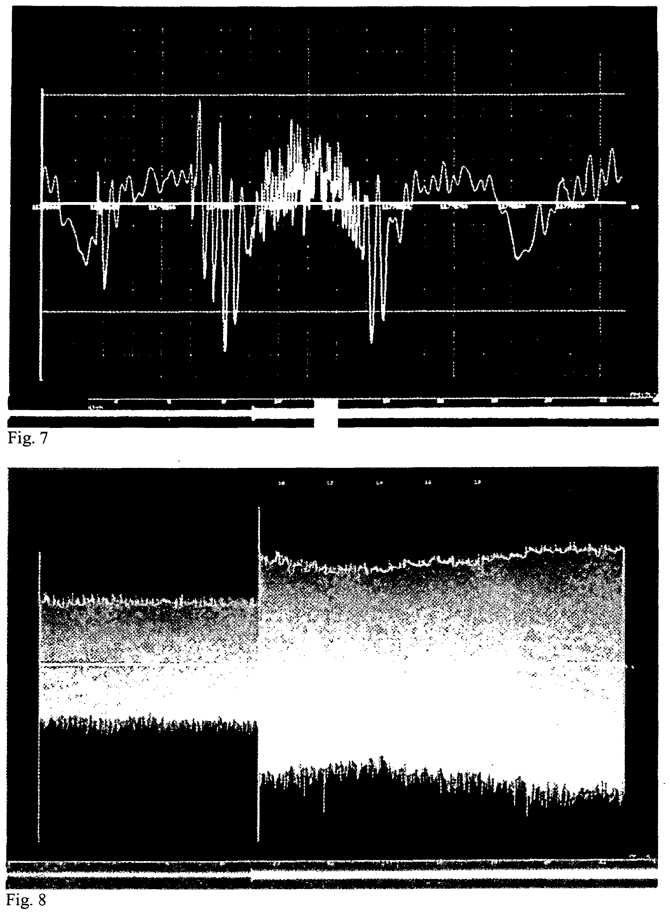

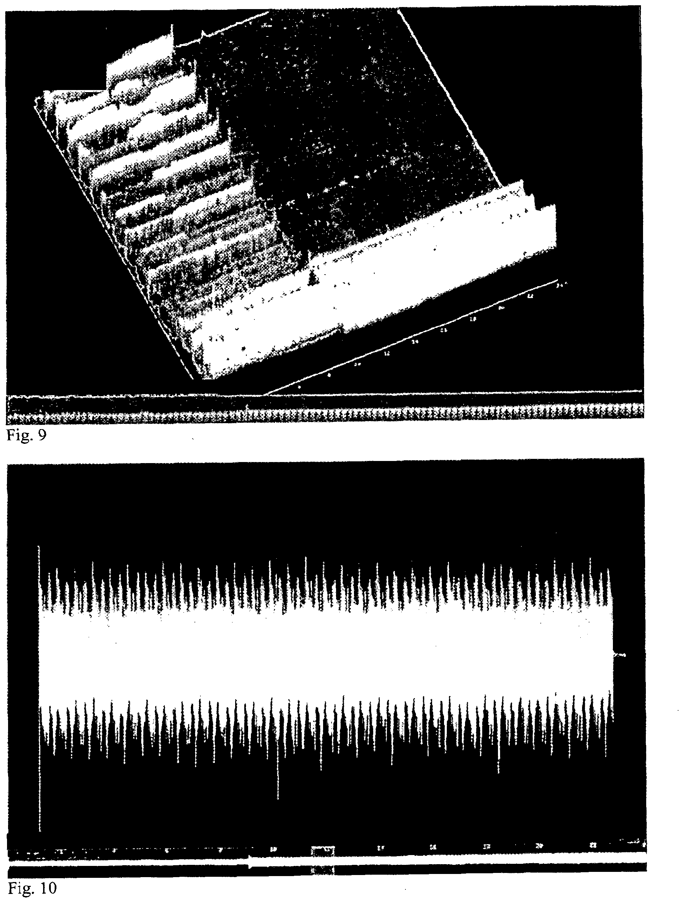

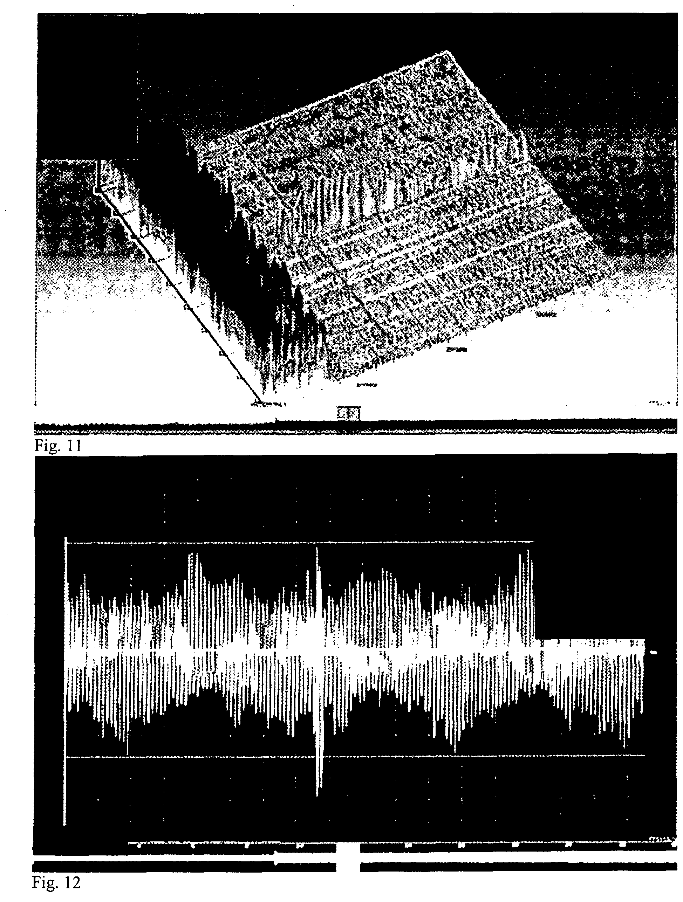

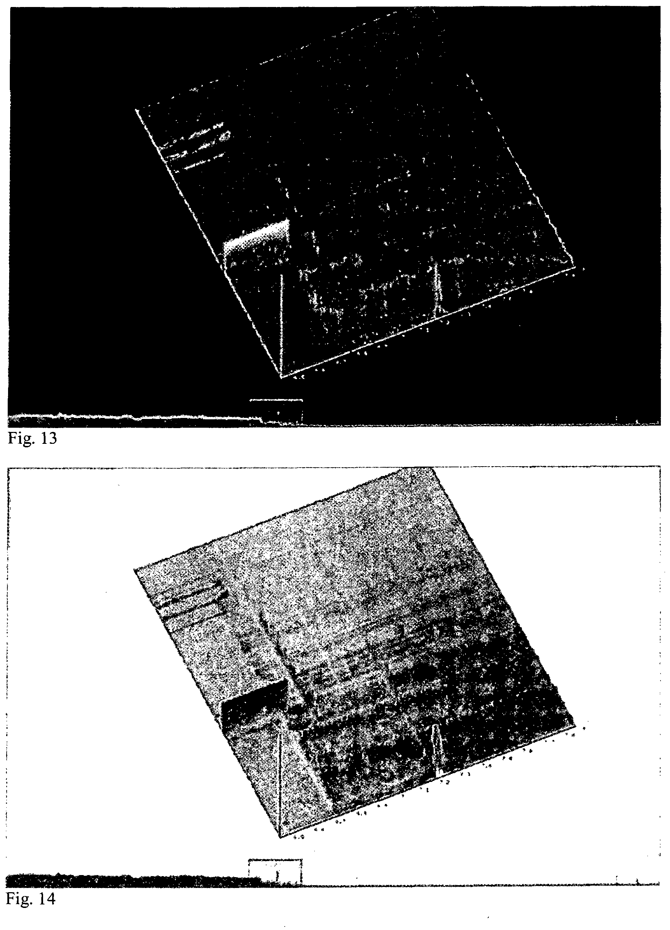

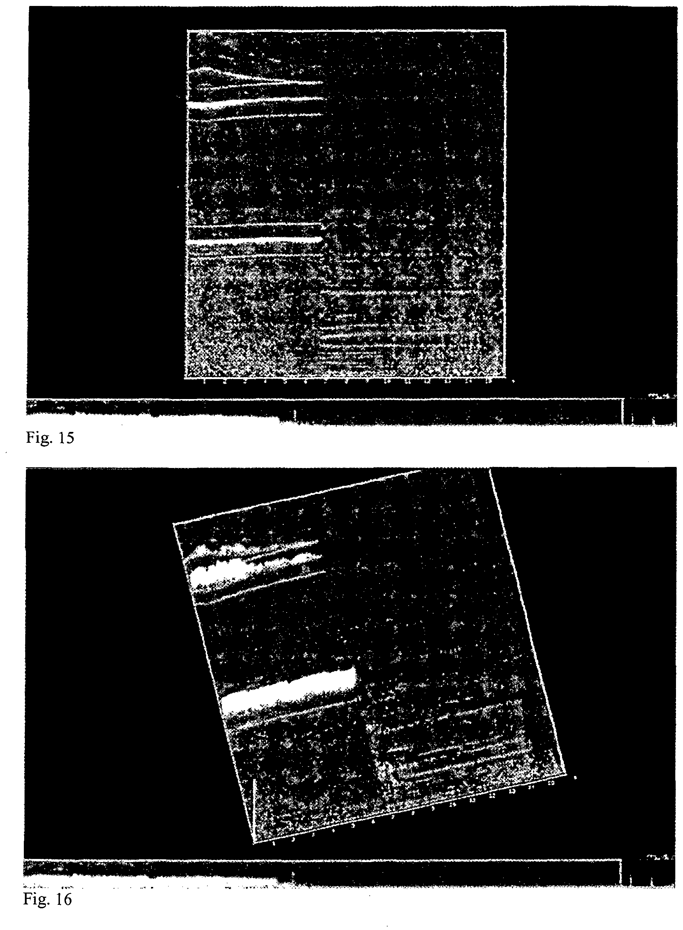

Beispiele von Frequenz-Zeit-Diagrammen aus tatsächlichen Induktivhärteprozessen sind in den Fig. 3 bis 16 dargestellt. Ersichtlich ergeben sie die vorstehend in Fig. 2 schematisch illustrierten Charakteristika.

Ein weiterer Aspekt der Erfindung betrifft plastisches Umformen, beispielsweise überwachtes Richten, insbesondere Biegerichten.

Beim Umformen insbesondere beim Umformen gehärteter Materialien können Risse auftreten.

Eine plastische Verformung des Materials ist gewollt, eine Rissbildung hingegen nicht.

Die Rissdetektion mittels Körperschall beim Auftreten des Risses ist bei einigen Produktionsprozessen Stand der Technik.

Eingesetzt wird dieses Verfahren höchst erfolgreich beim Richten von Getriebewellen, Motor- und Lenkbauteilen ein. Hierbei wird die, durch die Rissbildung freigesetzte Impulsenergie von im Frequenzbereich breitbandig empfindlichen Sensoren aufgefangen, gefiltert, bewertet und das Ergebnis an die Arbeitsmaschine gemeldet.

Dieses Verfahren erlaubt eine 100% Rissüberwachung während der Fertigung.

Es wäre darüber hinaus wünschenswert die Rissbildung selbst zu unterdrücken.

Wenn Materialveränderungen die dem Riss vorausgehen anhand ihrer Impulsemissionen erkannt werden können, kann bereits vor dem Reißen ein Signal an die Arbeitsmaschine, beispielsweise eine Biegemaschine, gegeben werden um so den eigentlichen Riss zu vermeiden, beispielsweise durch Verringern oder Lösen der Umformkraft.

Voraussetzung ist, die im Vergleich zur Rissbildung sehr kleinen Emissionen aufgrund starker plastischer Materialverschiebungen von den Produktionsgeräuschen trennen zu können.

Das gelingt durch Anwendung einer empfindlichen Sensor und Verstärkertechnologie sowie eine Echtzeit Frequenzanalyse auf der Basis der Technik der WO 2010/051954.

Damit ist es möglich, im Frequenzbild kleinste Emissionen zu detektieren und von den oft starken produktionsbedingten Arbeitsgeräuschen der Maschine zu trennen.

Damit ist es auch möglich das Bauteil nicht zyklisch in langsam steigender Belastung zu verformen sondern die Umformkraft allmählich zu steigern bis Emissionen aufgrund plastischer Verformungen auftreten, die dann ein Indiz für tatsächlich erfolgreiche Umformung darstellt.

Bisher wird das Bauteil belastet und nach einem oder mehreren Belastungshüben überprüft ob sich die Geometrie verändert hat.

Die Maschine tastete sich also durch Probieren an die tatsächliche plastische Umformung heran.

Mit der oben skizzierten körperschallüberwachten Umformung wird in jedem Belastungshub eine plastische Verformung erzielt, während gleichzeitig die Rissbildung vermieden wird. Hierzu kann die Umformkraft geregelt werden unter Rückkopplung der durch Frequenz-Zeit-Analyse erfassten Schallsignalemissionen aufgrund plastischer Verformungen, welche einem Riss vorausgehen.

Hierzu wird eine Anordnung mit einer Richtvorrichtung und einer Steuerung geschaffen, die Körperschall von einem Sensor aufnimmt und einer Frequenz-Zeit-Analyse in Echtzeit unterwirft, um beispielsweise charakteristische Muster zu erkennen, die eine plastische Verformung anzeigen. Wird eine derartige plastische Verformung erkannt, kann eine Rissbildung vermieden werden, indem die Umformkraft gelöst oder verringert wird.

## Patentansprüche

1. Vorrichtung (1) zum Erkennen einer Rissbildung bei einem Bauteil (2) infolge Härtens unter Wärmebehandlung des Bauteils (2), wie etwa Induktivhärten oder Flammhärten, und/oder infolge Richtens des Bauteils (2), umfassend einen Schallsensor (3), der mit dem Bauteil (2) körperschallkoppelbar ist, wobei die Vorrichtung (1) eine zum Frequenz- und Zeitbasierten Auswerten von während des Härtens bzw. Richtens vom Schallsensor (3) erfassten Schallsignalen ausgestaltete Auswerteeinheit (5) umfasst, **dadurch gekennzeichnet, dass** die Auswerteeinheit (5) eingerichtet ist zum Vergleichen unterschiedlicher Risskategorie-Schwellenwerte mit der integrierten Intensität von innerhalb eines Frequenz- und/oder Zeitfensters erfassten Schallsignalen, wobei für zwei Zeitabschnitte des Härteprozesses bzw. Richtprozesses unterschiedliche Risskategorie-Schwellenwerte vorgesehen sind.

2. Vorrichtung nach Anspruch 1, **dadurch gekennzeichnet, dass** die Auswerteeinheit (5) eingerichtet ist bei Überschreiten einer Gesamtenergiemenge der in einem mitlaufenden Zeitfenster erfassten Schallsignale einen Riss zu erkennen.

3. Vorrichtung nach Anspruch 1 oder 2, **dadurch gekennzeichnet, dass** die Auswerteeinheit (5) eingerichtet ist, eine Klassifizierung des Bauteils (2) nach Anzahl und/oder Stärke der erkannten Risse zu signalisieren.

4. Vorrichtung nach einem der Ansprüche 1 bis 3, **dadurch gekennzeichnet, dass** die die Auswerteeinheit (5) eingerichtet ist zur Auswertung während des Erhitzens, Abschreckens und/oder Abkühlens des Bauteils (2).

5. Vorrichtung nach einem der Ansprüche 1 bis 4, **dadurch gekennzeichnet, dass** die Auswerteeinheit (5) eingerichtet ist, die in einem Zeitfenster integrierte Energie der Schallsignale, ggf. oberhalb eines unteren Grenzfrequenzwerts, mit einem Schwellenwert zu vergleichen und bei Überschreiten eine Rissbildung zu erkennen, wobei vorzugsweise das Zeitfenster einem material- und/oder prozessabhängigen Zeitabschnitt für die Entstehung eines Risses oder einer Phase des Härtens bzw. Richtens entspricht.

6. Vorrichtung nach einem der Ansprüche 1 bis 5, **dadurch gekennzeichnet, dass** beim Induktionshärten ein Bandpassfilter mit einer Grenzfrequenz oberhalb der Induktionsfrequenz vorgesehen ist.

7. Vorrichtung nach einem der Ansprüche 1 bis 6, **dadurch gekennzeichnet, dass** die Auswerteeinheit (5) eingerichtet ist bei Überschreiten einer Gesamtenergiemenge der ab einem Startzeitpunkt erfassten Schallsignale einen Riss zu erkennen.

8. Verfahren zur Vermeidung von Spannungsrissen beim Umformen, insbesondere Richten, eines Bauteils (2), insbesondere während oder nach einem Härten des Bauteils (2), umfassend eine Frequenz-Zeit-Analyse in Echtzeit, wobei das Bauteil (2) einer ansteigenden Umformkraft ausgesetzt wird und dabei Körperschallemissionen erfasst werden, **dadurch gekennzeichnet, dass** die Körperschallemissionen unter Frequenz-Zeit-Analyse in Echtzeit ausgewertet werden, um durch plastische Verformung hervorgerufene Körperschallemissionen zu erkennen, und das Umformen nach dem Erkennen von durch plastische Verformung hervorgerufenen Körperschallemissionen beendet wird, wobei unterschiedliche Risskategorie-Schwellenwerte mit der integrierten Intensität von innerhalb eines Frequenz- und/oder Zeitfensters erfassten Schallsignalen verglichen werden, wobei für zwei Zeitabschnitte des Umform- bzw. Härteprozesses unterschiedliche Risskategorie-Schwellenwerte verwendet werden.

9. Verfahren nach Anspruch 8, **dadurch gekennzeichnet, dass** das Umformen nach einer bestimmten Zeitspanne nach Einsetzen der durch plastische Verformung hervorgerufenen Körperschallemissionen beendet wird; und/oder
dass das Umformen nach Überschreiten eines Schwellenwerts für die aufintegrierte Energie der Körperschallemissionen, insbesondere der durch plastische Verformung hervorgerufenen Körperschallemissionen, beendet wird.

10. Verfahren nach Anspruch 8 oder 9, **dadurch gekennzeichnet, dass** das Umformen nach Überschreiten eines Schwellenwerts für die Amplitude der Körperschallemissionen, insbesondere der durch plastische Verformung hervorgerufenen Körperschallemissionen, beendet wird.

11. Verfahren nach einem der Ansprüche 8 bis 10, **dadurch gekennzeichnet, dass** zum Beenden des Umformens die Umformkraft gelöst, verringert oder auf dem letzten Wert gehalten wird.

12. Verfahren nach einem der Ansprüche 8 bis 11, **dadurch gekennzeichnet, dass** nach Beenden des Umformens das Bauteil (2) erneut einem Umformprozess ausgesetzt wird, wobei mehrere Umformprozesse bis zum Erreichen der gewünschten Endform des Bauteils (2) nacheinander durchgeführt werden können.

13. Anordnung zum Richten eines Bauteils (2) durch plastisches Umformen entsprechend dem Verfahren nach einem der Ansprüche 8 bis 12, umfassend eine Richtvorrichtung zum Erzeugen einer Umformkraft, sowie eine Vorrichtung zum Erkennen einer Rissbildung nach einem der Ansprüche 1 bis 7 mit einem Körperschallsensor zum Anbringen an ein zu richtendes Bauteil, sowie einer Steuerung, die während des Einwirkens der Umformkraft auf das Bauteil (2) Körperschallemissionen erfasst und in Echtzeit auswertet und bei Erkennen von Körperschallemissionen, die durch plastische Verformung des Bauteils (2) entstehen, die Richtvorrichtung derart steuert, dass die Umformung beendet wird, wobei die Steuerung derart ausgestaltet ist, dass zum Beenden der Umformung die Richtvorrichtung zum Halten der Umformkraft, Verringern der Umformkraft oder Lösen der Umformkraft gesteuert wird, und die Anordnung zum Wiederholen der Umformung nach Beendigung der Umformung ausgestaltet ist, bis das Bauteil eine gewünschte Endform erreicht.

14. Computerprogrammprodukt mit auf einem Computer ausführbarem Code umfassend Befehle, die bewirken, dass die Vorrichtung des Anspruchs 13 die Verfahrensschritte des Verfahrens nach einem der Ansprüche 8 bis 12 ausführt.

## Claims

1. A device (1) for detecting crack formation in a component (2) as a consequence of hardening under heat treatment of the component (2), such as for example inductive hardening or flame hardening, and/or as a consequence of straightening of the component (2), comprising a sound sensor (3), which can be coupled in terms of structure-borne sound to the component (2), the device (1) comprising an evaluation unit (5) configured for the frequency- and time-based evaluation of sound signals detected by the sound sensor (3) during the hardening or straightening, **characterized in that** the evaluation unit (5) is set up for comparing different crack category threshold values with the integrated intensity of sound signals detected within a frequency and/or time window, wherein different crack category threshold values are provided for two time periods of the hardening process or straightening process.

2. The device according to Claim 1, **characterized in that** the evaluation unit (5) is set up to detect a crack if a total amount of energy of the detected sound signals in a concurrent time window is exceeded.

3. The device according to Claim 1 or 2, **characterized in that** the evaluation unit (5) is set up to signal a classification of the component (2) according to the number and/or severity of the cracks detected.

4. The device according to one of Claims 1 to 3, **characterized in that** the evaluation unit (5) is set up to evaluate during the heating, quenching and/or cooling of the component (2).

5. The device according to one of Claims 1 to 4, **characterized in that** the evaluation unit (5) is set up to compare the integrated energy of the sound signals in a time window, if appropriate above a lower cut-off frequency value, with a threshold value, and in the case of exceeding, to detect crack formation, wherein the time window preferably corresponds to a material- and/or process-dependent time period for the formation of a crack or a phase of the hardening or straightening.

6. The device according to one of Claims 1 to 5, **characterized in that** during induction hardening, a band-pass filter is provided with a cut-off frequency above the induction frequency.

7. The device according to one of Claims 1 to 6, **characterized in that** the evaluation unit (5) is set up to detect a crack if a total amount of energy of the sound signals detected from a start time is exceeded.

8. A method for preventing stress cracks during forming, particularly straightening, of a component (2), particularly during or after hardening of the component (2), comprising a frequency-time analysis in real time, the component (2) being exposed to an increasing forming force and emissions of structure-borne sound being detected at the same time, **characterized in that** the emissions of structure-borne sound are evaluated under frequency-time analysis in real time, in order to detect emissions of structure-borne sound caused by plastic deformation and the formation is ended after the detection of emissions of structure-borne sound caused by plastic deformation, wherein different crack category threshold values are compared with the integrated intensity of sound signals detected within a frequency and/or time window, wherein different crack category threshold values are used for two time periods of the forming or hardening process.

9. The method according to Claim 8, **characterized in that** the formation is ended after a certain time interval after the start of the emissions of structure-borne sound caused by plastic deformation; and/or
**in that** the formation is ended after a threshold value for the integrated energy of the emissions of structure-borne sound, particularly the emissions of structure-borne sound caused by plastic deformation, is exceeded.

10. The method according to Claim 8 or 9, **characterized in that** the formation is ended after a threshold value for the amplitude of the emissions of structure-borne sound, particularly the emissions of structure-borne sound caused by plastic deformation, is exceeded.

11. The method according to one of Claims 8 to 10, **characterized in that** to end the formation, the forming force is released, decreased or kept at the last value.

12. The method according to one of Claims 8 to 11, **characterized in that** after ending the formation, the component (2) is once again exposed to a forming process, wherein a plurality of forming processes can be carried out successively until the desired final shape of the component (2) is achieved.

13. An arrangement for straightening a component (2) by plastic formation according to the method according to one of Claims 8 to 12, comprising a straightening device for generating a forming force, and a device for detecting crack formation according to one of Claims 1 to 7 having a structure-borne sound sensor for attachment to a component to be straightened, and a control, which detects, and in real time evaluates, emissions of structure-borne sound whilst the forming force is acting on the component (2) and upon detection of emissions of structure-borne sound, which arise due to plastic deformation of the component (2), controls the straightening device in such a manner that the formation is ended, wherein the control is configured in such a manner that to end the formation, the straightening device is controlled to hold the forming force, decrease the forming force or release the forming force, and the arrangement is configured to repeat the formation after ending the formation, until the component has achieved a desired final shape.

14. A computer program product with code that can be executed on a computer, comprising commands which cause the device of Claim 13 to execute the method steps of the method according to one of Claims 8 to 12.

## Revendications

1. Dispositif (1) pour la détection d'une formation de fissures d'un échantillon (2) à la suite d'un durcissement sous traitement thermique de l'échantillon (2), comme par exemple le durcissement par induction ou le durcissement à la flamme et/ou à la suite d'un alignement de l'échantillon (2), comprenant un capteur acoustique (3), qui peut être couplé du point de vue des sons structuraux à l'échantillon (2), sachant que le dispositif (1) comprend une unité d'évaluation (5) structurée pour évaluer sur une base fréquentielle et temporelle des signaux acoustiques saisis par le capteur acoustique (3) pendant le durcissement ou l'alignement, **caractérisé en ce que** l'unité d'évaluation (5) est agencée pour comparer des valeurs seuils catégorielles de fissures différentes à l'intensité intégrée des signaux acoustiques saisis à l'intérieur d'une fenêtre fréquentielle et/ou temporelle, sachant que pour deux intervalles de temps du processus de durcissement ou du processus d'alignement des valeurs seuil catégorielles de fissures différentes sont prévues.

2. Dispositif selon la revendication 1, **caractérisé en ce que** l'unité d'évaluation (5) est agencée pour détecter une fissure lors du dépassement d'une quantité d'énergie totale des signaux acoustiques saisis dans une fenêtre temporelle concomitante.

3. Dispositif selon la revendication 1 ou 2, **caractérisé en ce que** l'unité d'évaluation (5) est agencée pour signaler une classification de l'échantillon (2) selon le nombre et/ou la grosseur des fissures détectées.

4. Dispositif selon l'une quelconque des revendications 1 à 3, **caractérisé en ce que** l'unité d'évaluation (5) est agencée pour évaluer pendant l'échauffement, la trempe et/ou le refroidissement de l'échantillon (2).

5. Dispositif selon l'une quelconque des revendications 1 à 4, **caractérisé en ce que** l'unité d'évaluation (5) est agencée pour comparer l'énergie intégrée dans une fenêtre temporelle des signaux acoustiques, le cas échéant au-dessus d'une valeur fréquentielle limite inférieure, à une valeur seuil et détecter une formation de fissures en cas de dépassement, sachant de préférence que la fenêtre temporelle correspond à un intervalle de temps fonction du matériau et/ou du processus pour l'apparition d'une fissure ou à une phase du durcissement ou de l'alignement.

6. Dispositif selon l'une quelconque des revendications 1 à 5, **caractérisé en ce qu'**un filtre passe-bande avec une fréquence limite au-dessus de la fréquence d'induction est prévue lors du durcissement par induction.

7. Dispositif selon l'une quelconque des revendications 1 à 6, **caractérisé en ce que** l'unité d'évaluation (5) est agencée pour détecter une fissure lors du dépassement d'une quantité d'énergie totale des signaux acoustiques saisis à partir d'un moment initial.

8. Procédé pour l'évitement de fissures lors de la déformation, en particulier de l'alignement, d'un échantillon (2), en particulier pendant ou après un durcissement de l'échantillon (2), comprenant une analyse fréquence-temps en temps réel, sachant que l'échantillon (2) est exposé à une force de déformation croissante et qu'à cet effet des émissions de sons structuraux sont saisies, **caractérisé en ce que** les émissions de sons structuraux sont évaluées par une analyse fréquence-temps en temps réel pour détecter des émissions de sons structuraux causées par déformation plastique et la déformation est terminée après la détection des émissions de sons structuraux causées par déformation plastique, sachant que des valeurs seuils catégorielles de fissures différentes sont comparées à l'intensité intégrée de signaux acoustiques saisis à l'intérieur d'une fenêtre fréquentielle et/ou temporelle, sachant que pour deux intervalles de temps du processus de déformation ou de durcissement, différentes valeurs seuils catégorielles de fissures sont utilisées.

9. Procédé selon la revendication 8, **caractérisé en ce que** la déformation est terminée après un certain laps de temps après utilisation des émissions de sons structuraux causées par déformation plastique, et/ou
**en ce que** la déformation est terminée après dépassement d'une valeur seuil pour l'énergie intégrée des émissions de sons structuraux, en particulier des émissions de sons structuraux causées par déformation plastique.

10. Procédé selon la revendication 8 ou 9, **caractérisé en ce que** la déformation est terminée après dépassement d'une valeur seuil pour l'amplitude des émissions de sons structuraux, en particulier des émissions de sons structuraux causées par déformation plastique.

11. Procédé selon l'une quelconque des revendications 8 à 10, **caractérisé en ce que** pour terminer la déformation, la force de déformation est annulée, réduite ou maintenue à la dernière valeur.

12. Procédé selon l'une quelconque des revendications 8 à 11, **caractérisé en ce que** l'échantillon (2) est à nouveau exposé à un processus de déformation après la fin de la déformation, sachant que plusieurs processus de déformation peuvent être effectués l'un derrière l'autre jusqu'à l'obtention de la forme définitive souhaitée de l'échantillon (2).

13. Système pour aligner un échantillon (2) par déformation plastique conformément au procédé selon l'une quelconque des revendications 8 à 12, comprenant un dispositif d'alignement pour produire une force de déformation, ainsi qu'un dispositif pour identifier une formation de fissures selon l'une quelconque des revendications 1 à 7, avec un capteur de sons structuraux pour montage sur un échantillon à aligner, ainsi qu'une commande, qui saisit et évalue en temps réel les émissions de sons structuraux pendant l'action de la force de déformation sur l'échantillon (2) et en cas de détection des émissions de sons structuraux, qui apparaissent par déformation plastique de l'échantillon (2), le dispositif d'alignement commande de telle sorte que la déformation est terminée, sachant que la commande est structurée de telle sorte que pour terminer la déformation, le dispositif d'alignement est commandé pour maintenir la force de déformation, réduire la force de déformation ou annuler la force de déformation et le système est structuré pour répéter la déformation après la fin de la déformation jusqu'à ce que l'échantillon ait atteint une forme définitive souhaitée.

14. Produit informatisé avec un code exécutable sur un ordinateur comprenant des ordres, qui font en sorte que le dispositif selon la revendication 13 exécute les étapes de procédé du procédé selon l'une quelconque des revendications 8 à 12.
